# EUROPEAN PATENT APPLICATION

(11) **EP 3 711 516 A1**
(43) Date of publication of application: **23.09.2020**
(21) Application number: 19020146.7
(22) Date of filing: 22.03.2019
(51) Int. Cl.: A24F 47/00, H02J 50/10

(54) **SMOKING SUBSTITUTE SYSTEM**

(71) Applicant: NERUDIA LIMITED, Liverpool Merseyside L24 9HP (GB)
(72) Inventor: The designation of the inventor has not yet been filed
(74) Representative: Mewburn Ellis LLP

(57) **Abstract**

A smoking substitute system comprising a heated tobacco device (301) with wireless charging capability is provided. The system also comprises a wireless charging dock configured to wirelessly charge the device. Specifically, a heated tobacco device is provided, comprising a rechargeable battery (305) and a wireless charging module (306) configured to wirelessly receive energy for charging the rechargeable battery.

## Description

### TECHNICAL FIELD

The present invention relates to a smoking substitute system and particularly, although not exclusively, to a heated tobacco device with wireless charging capability and a system for enabling the wireless charging capability of the heated tobacco device.

### BACKGROUND

The smoking of tobacco is generally considered to expose a smoker to potentially harmful substances. It is generally thought that a significant amount of the potentially harmful substances are generated through the heat caused by the burning and/or combustion of the tobacco and the constituents of the burnt tobacco in the tobacco smoke itself.

Conventional combustible smoking articles, such as cigarettes, typically comprise a cylindrical rod of tobacco comprising shreds of tobacco which is surrounded by a wrapper, and usually also a cylindrical filter axially aligned in an abutting relationship with the wrapped tobacco rod. The filter typically comprises a filtration material which is circumscribed by a plug wrap. The wrapped tobacco rod and the filter are joined together by a wrapped band of tipping paper that circumscribes the entire length of the filter and an adjacent portion of the wrapped tobacco rod. A conventional cigarette of this type is used by lighting the end opposite to the filter, and burning the tobacco rod. The smoker receives mainstream smoke into their mouth by drawing on the mouth end or filter end of the cigarette.

Combustion of organic material such as tobacco is known to produce tar and other potentially harmful by-products. There have been proposed various smoking substitute systems (or "substitute smoking systems") in order to avoid the smoking of tobacco.

Such smoking substitute systems can form part of nicotine replacement therapies aimed at people who wish to stop smoking and overcome a dependence on nicotine.

Smoking substitute systems include electronic systems that permit a user to simulate the act of smoking by producing an aerosol (also referred to as a "vapour") that is drawn into the lungs through the mouth (inhaled) and then exhaled. The inhaled aerosol typically bears nicotine and/or flavourings without, or with fewer of, the odour and health risks associated with traditional smoking.

In general, smoking substitute systems are intended to provide a substitute for the rituals of smoking, whilst providing the user with a similar experience and satisfaction to those experienced with traditional smoking and with combustible tobacco products. Some smoking substitute systems use smoking substitute articles (also referred to as a "consumables") that are designed to resemble a traditional cigarette and are cylindrical in form with a mouthpiece at one end.

The popularity and use of smoking substitute systems has grown rapidly in the past few years. Although originally marketed as an aid to assist habitual smokers wishing to quit tobacco smoking, consumers are increasingly viewing smoking substitute systems as desirable lifestyle accessories.

There are a number of different categories of smoking substitute systems, each utilising a different smoking substitute approach.

One approach for a smoking substitute system is the so-called Heated Tobacco ("HT") approach in which tobacco (rather than an "e-liquid") is heated or warmed to release vapour. HT is also known as "heat not burn" ("HNB"). The tobacco may be leaf tobacco or reconstituted tobacco. The vapour may contain nicotine and/or flavourings. In the HT approach the intention is that the tobacco is heated but not burned, i.e. the tobacco does not undergo combustion.

A typical HT smoking substitute system may include a device and a consumable. The consumable may include the tobacco material. The device and consumable may be configured to be physically coupled together. In use, heat may be imparted to the tobacco material by a heating element of the device, wherein airflow through the tobacco material causes components in the tobacco material to be released as vapour. A vapour may also be formed from a carrier in the tobacco material (this carrier may for example include propylene glycol and/or vegetable glycerine) and additionally volatile compounds released from the tobacco. The released vapour may be entrained in the airflow drawn through the tobacco.

As the vapour passes through the consumable (entrained in the airflow) from the location of vaporisation to an outlet of the consumable (e.g. a mouthpiece), the vapour cools and condenses to form an aerosol for inhalation by the user. The aerosol will normally contain the volatile compounds.

In HT smoking substitute systems, heating as opposed to burning the tobacco material is believed to cause fewer, or smaller quantities, of the more harmful compounds ordinarily produced during smoking. Consequently, the HT approach may reduce the odour and/or health risks that can arise through the burning, combustion and pyrolytic degradation of tobacco.

There may be a need for improved design of smoking substitute systems, in particular HT smoking substitute systems, to enhance the user experience and improve the function of the HT smoking substitute system.

The present disclosure has been devised in the light of the above considerations.

### SUMMARY OF THE INVENTION

At its most general, the present invention relates to heated tobacco device with wireless charging capability.

According to a first aspect of the present invention, there is provided a heated tobacco device comprising a rechargeable battery and a wireless charging module configured to wirelessly receive energy for charging the rechargeable battery.

Optional features will now be set out. These are applicable singly or in any combination with any aspect.

Optionally, the device comprises a device controller, coupled to the rechargeable battery, and configured to control an output power from the wireless charging module. By controlling the output power from the wireless charging module, accidental excessive charging of the replaceable battery can be avoided.

Advantageously, the wireless charging module comprises a first plurality of coils and at least one of the first plurality of coils is located adjacent to the rechargeable battery so as to efficiently charge the rechargeable battery without any power loss.

Conveniently, the wireless charging module is located on an inner surface of the heated tobacco device. Alternatively, the wireless charging module is located within an electronic compartment located on the inner surface of the heated tobacco device. By placing the wireless charging module within the electronic compartment, the wireless charging module can be protected from heat generated during the heating process.

Optionally, the at least one of the first plurality of coils is located at a predetermined distance from the outer surface of the device so as to efficiently and wirelessly receive the energy for charging the rechargeable battery.

Advantageously, the outer surface of the device is geometrically shaped for increasing coupling alignment between the first and the second plurality of coils during charging. By increasing coupling alignment the coupling if beneficially influenced, e.g. by arranging the outer surface flat with regard to the charging surface to reduce or minimize energy transfer loss. The device may be configured to wirelessly receive abundant amount of energy in less time.

Conveniently, the device do not comprise a power input port, and capable of receiving energy only wirelessly for charging the rechargeable battery. The absence of power input port may reduce the weight and overall cost of the device.

Advantageously, the device further comprises at least one light, located on a side opposite to the first plurality of coils, for indicating charge level or charging status to a user or when the device is in a preferred charging orientation. This would enhance intuitive user experience.

Conveniently, the device further comprises at least one button, located on a side opposite to the first plurality of coils, for user interaction. User interaction may be related to know about the charging level or charging state of the device. This would enhance intuitive user experience.

Optionally, the device further comprises at least one feedback means to generate one of a haptic feedback, audio and visual feedback to indicate the user about one of beginning, progressing and ending of the wireless charging operation. This would keep the user informed about the progress of charging and restrict the user from using the device while using.

The device may comprise an elongate body. An end of the elongate body may be configured for engagement with an aerosol-forming article (e.g. a heated tobacco (HT) consumable. The device may comprise a cavity that is configured for receipt of at least a portion of the consumable (i.e. for engagement with the consumable). The other end of the body may be configured for engagement with a wireless charging dock or a wireless charging system that enables wireless transmission of power to charge the device. Outer surface of the other end of the body may be configured to be flat with increased surface density so as to wirelessly receive abundant energy in less charging time. The aerosol-forming article may be of the type that comprises an aerosol former (e.g. carried by an aerosol-forming substrate).

The device may comprise a heater for heating the aerosol-forming article. The heater may comprise a heating element, which may be in the form of a rod that extends from the body of the device. The heating element may extend from the end of the body that is configured for engagement with the aerosol-forming article.

The heater (and thus the heating element) may be rigidly mounted to the body. The heating element may be elongate so as to define a longitudinal axis and may, for example, have a transverse profile (i.e. transverse to a longitudinal axis of the heating element) that is substantially circular (i.e. the heating element may be generally cylindrical). Alternatively, the heating element may have a transverse profile that is rectangular (i.e. the heater may be a "blade heater"). The heating element may alternatively be in the shape of a tube (i.e. the heater may be a "tube heater"). The heating element may take other forms (e.g. the heating element may have an elliptical transverse profile). The shape and/or size (e.g. diameter) of the transverse profile of the heating element may be generally consistent for the entire length (or substantially the entire length) of the heating element.

The heating element may be between 15 mm and 25 mm long, e.g. between 18 mm and 20 mm long, e.g. around 19 mm long. The heating element may have a diameter of between 1.5 mm and 2.5 mm, e.g. a diameter between 2 mm and 2.3 mm, e.g. a diameter of around 2.15 mm.

The heating element may be formed of ceramic. The heating element may comprise a core (e.g. a ceramic core) comprising Al2O3. The core of the heating element may have a diameter of 1.8 mm to 2.1 mm, e.g. between 1.9 mm and 2 mm. The heating element may comprise an outer layer (e.g. an outer ceramic layer) comprising Al2O3. The thickness of the outer layer may be between 160 µm and 220 µm, e.g. between 170 µm and 190 µm, e.g. around 180 µm. The heating element may comprise a heating track, which may extend longitudinally along the heating element. The heating track may be sandwiched between the outer layer and the core of the heating element. The heating track may comprise tungsten and/or rhenium. The heating track may have a thickness of around 20 µm.

The heating element may be located in the cavity (of the device), and may extend (e.g. along a longitudinal axis) from an internal base of the cavity towards an opening of the cavity. The length of the heating element (i.e. along the longitudinal axis of the heater) may be less than the depth of the cavity. Hence, the heating element may extend for only a portion of the length of the cavity. That is, the heating element may not extend through (or beyond) the opening of the cavity.

The heating element may be configured for insertion into an aerosol-forming article (e.g. a HT consumable) when an aerosol-forming article is received in the cavity. In that respect, a distal end (i.e. distal from a base of the heating element where it is mounted to the device) of the heating element may comprise a tapered portion, which may facilitate insertion of the heating element into the aerosol-forming article. The heating element may fully penetrate an aerosol-forming article when the aerosol-forming article is received in the cavity. That is, the entire length, or substantially the entire length, of the heating element may be received in the aerosol-forming article.

The heating element may have a length that is less than, or substantially the same as, an axial length of an aerosol-forming substrate forming part of an aerosol-forming article (e.g. a HT consumable). Thus, when such an aerosol-forming article is engaged with the device, the heating element may only penetrate the aerosol-forming substrate, rather than other components of the aerosol-forming article. The heating element may penetrate the aerosol-forming substrate for substantially the entire axial length of the aerosol forming-substrate of the aerosol-forming article. Thus, heat may be transferred from (e.g. an outer circumferential surface of) the heating element to the surrounding aerosol-forming substrate, when penetrated by the heating element. That is, heat may be transferred radially outwardly (in the case of a cylindrical heating element) or e.g. radially inwardly (in the case of a tube heater).

Where the heater is a tube heater, the heating element of the tube heater may surround at least a portion of the cavity. When the portion of the aerosol-forming article is received in the cavity, the heating element may surround a portion of the aerosol-forming article (i.e. so as to heat that portion of the aerosol-forming article). In particular, the heating element may surround an aerosol forming substrate of the aerosol-forming article. That is, when an aerosol-forming article is engaged with the device, the aerosol forming substrate of the aerosol-forming article may be located adjacent an inner surface of the (tubular) heating element. When the heating element is activated, heat may be transferred radially inwardly from the inner surface of the heating element to heat the aerosol forming substrate.

The cavity may comprise a (e.g. circumferential) wall (or walls) and the (tubular) heating element may extend around at least a portion of the wall(s). In this way, the wall may be located between the inner surface of the heating element and an outer surface of the aerosol-forming article. The wall (or walls) of the cavity may be formed from a thermally conductive material (e.g. a metal) to allow heat conduction from the heating element to the aerosol-forming article. Thus, heat may be conducted from the heating element, through the cavity wall (or walls), to the aerosol-forming substrate of an aerosol-forming article received in the cavity.

In some embodiments the device may comprise a cap disposed at the end of the body that is configured for engagement with an aerosol-forming article. Where the device comprises a heater having a heating element, the cap may at least partially enclose the heating element. The cap may be moveable between an open position in which access is provided to the heating element, and a closed position in which the cap at least partially encloses the heating element. The cap may be slideably engaged with the body of the device, and may be slideable between the open and closed positions.

The cap may define at least a portion of the cavity of the device. That is, the cavity may be fully defined by the cap, or each of the cap and body may define a portion of the cavity. The cap may comprise an opening to the cavity. The opening may be configured for receipt of at least a portion of an aerosol-forming article. That is, an aerosol-forming article may be inserted through the opening and into the cavity (so as to be engaged with the device).

The cap may be configured such that when an aerosol-forming article is engaged with the device (e.g. received in the cavity), only a portion of the aerosol-forming article is received in the cavity. That is, a portion of the aerosol-forming article (not received in the cavity) may protrude from (i.e. extend beyond) the opening. This (protruding) portion of the aerosol-forming article may be a terminal (e.g. mouth) end of the aerosol-forming article, which may be received in a user's mouth for the purpose of inhaling aerosol formed by the device.

The device may comprise a power source or may be connectable to a power source (e.g. a power source separate to the device). In one aspect, the device may be configured to wirelessly receive power from power source separate to the device. The power source may be electrically connectable to the heater. In that respect, altering (e.g. toggling) the electrical connection of the power source to the heater may affect a state of the heater. For example, toggling the electrical connection of the power source to the heater may toggle the heater between an on state and an off state. The power source may be a power store. For example, the power source may be a battery or rechargeable battery (e.g. a lithium ion battery).

The device may comprise an input connection (e.g. a USB port, Micro USB port, USB-C port, etc.). The input connection may be configured for connection to an external source of electrical power, such as a mains electrical supply outlet. The input connection may, in some cases, be used as a substitute for an internal power source (e.g. battery or rechargeable battery). That is, the input connection may be electrically connectable to the heater (for providing power to the heater). Hence, in some forms, the input connection may form at least part of the power source of the device.

Where the power source comprises a rechargeable power source (such as a rechargeable battery), the input connection may be used to charge and recharge the power source.

The device may comprise a wireless charging module configured to wirelessly receive energy for charging the rechargeable battery. In one aspect, the wireless charging module is located on an inner surface of the heated tobacco device. The wireless charging module comprises a first plurality of coils located adjacent to the power source, with at least one of the first plurality of coils being located at a predetermined distance from the outer surface of the device.

In another aspect, the device is adapted for receiving energy only wirelessly for charging the rechargeable battery, and wherein the device in particular does not comprise a dedicated power input port. In other words, the device receives energy wirelessly from the external power source separate to the device. For example, the device does not include the input connection or input power ports such as USB port, Micro USB port, USB-C port, etc., and directly receives energy from the external power source via the first plurality of coils without receiving through the input connection or input power ports.

The device may comprise a user interface (Ul). In some embodiments the UI may include input means to receive operative commands from the user. The input means of the UI may allow the user to control at least one aspect of the operation of the device. In some embodiments the input means may comprise a power button to switch the device between an on state and an off state. In another aspect, the input means may comprise at least one button located on side opposite to the first plurality of coils, for user interaction.

In some embodiments the UI may additionally or alternatively comprise output means to convey information to the user. In some embodiments the output means may comprise a light to indicate a condition of the device (and/or the aerosol-forming article) to the user. The condition of the device (and/or aerosol-forming article) indicated to the user may comprise a condition indicative of the operation of the heater. For example, the condition may comprise whether the heater is in an off state or an on state. In some embodiments, the UI unit may comprise at least one of a button, a display, a touchscreen, a switch, a light, and the like. In another example, the condition may comprise what is charge level or charging status or when the device is in a preferred charging orientation. In yet another example, the light may indicate the beginning, progressing and ending of the wireless charging operation. For example, the output means may comprise one or more (e.g. two, three, four, etc.) light-emitting diodes ("LEDs") that may be located on the body of the device. In one aspect, the LEDs may be located on a side opposite to the first plurality of coils.

The device may further comprise a feedback means to generate one of haptic feedback, audio and visual feedback to indicate the user about one of beginning, progressing and ending of the wireless charging operation. Example feedback means include one or more of haptic sensor, microphone and touch screen display.

The device may further comprise a puff sensor (e.g. airflow sensor), which form part of the input means of the Ul. The puff sensor may be configured to detect a user drawing on an end (i.e. a terminal (mouth) end) of the aerosol-forming article. The puff sensor may, for example, be a pressure sensor or a microphone. The puff sensor may be configured to produce a signal indicative of a puff state. The signal may be indicative of the user drawing (an aerosol from the aerosol-forming article) such that it is e.g. in the form of a binary signal. Alternatively or additionally, the signal may be indicative of a characteristic of the draw (e.g. a flow rate of the draw, length of time of the draw, etc).

The device may comprise a controller, or may be connectable to a controller that may be configured to control at least one function of the device. The controller may comprise a microcontroller that may e.g. be mounted on a printed circuit board (PCB). The controller may also comprise a memory, e.g. non-volatile memory. The memory may include instructions, which, when implemented, may cause the controller to perform certain tasks or steps of a method. Where the device comprises an input connection, the controller may be connected to the input connection.

The controller may be configured to control the operation of the heater (and e.g. the heating element). Thus, the controller may be configured to control vaporisation of an aerosol forming part of an aerosol-forming article engaged with the device. The controller may be configured to control the voltage applied by power source to the heater. For example, the controller may be configured to toggle between applying a full output voltage (of the power source) to the heater and applying no voltage to the heater. Alternatively or additionally, the control unit may implement a more complex heater control protocol.

The device may further comprise a voltage regulator to regulate the output voltage supplied by the power source to form a regulated voltage. The regulated voltage may subsequently be applied to the heater.

In some embodiments, where the device comprises a Ul, the controller may be operatively connected to one or more components of the Ul. The controller may be configured to receive command signals from an input means of the Ul. The controller may be configured to control the heater in response to the command signals. For example, the controller may be configured to receive "on" and "off" command signals from the UI and, in response, may control the heater so as to be in a corresponding on or off state.

The controller may be configured to send output signals to a component of the UI. The UI may be configured to convey information to a user, via an output means, in response to such output signals (received from the controller). For example, where the device comprises one or more LEDs, the LEDs may be operatively connected to the controller. Hence, the controller may be configured to control the illumination of the LEDs (e.g. in response to an output signal). For example, the controller may be configured to control the illumination of the LEDs according to (e.g. an on or off) state of the heater.

Where the device comprises a sensor (e.g. a puff/airflow sensor), the controller may be operatively connected to the sensor. The controller may be configured to receive a signal from the sensor (e.g. indicative of a condition of the device and/or engaged aerosol-forming article). The controller may be configured to control the heater, or an aspect of the output means, based on the signal from the sensor.

In some aspect, the controller may be configured to control output power from the wireless charging module for charging the rechargeable battery.

The device may comprise a wireless interface configured to communicate wirelessly (e.g. via Bluetooth (e.g. a Bluetooth low-energy connection) or Wi-Fi) with an external device. Similarly, the input connection may be configured for wired connection to an external device so as to provide communication between the device and the external device.

The external device may be a mobile device. For example, the external device may be a smart phone, tablet, smart watch, or smart car. An application (e.g. app) may be installed on the external device (e.g. mobile device). The application may facilitate communication between the device and the external device via the wired or wireless connection.

The external device may also be a wireless dock capable of wirelessly charging the device.

The wireless or wired interface may be configured to transfer signals between the external device and the controller of the device. In this respect, the controller may control an aspect of the device in response to a signal received from an external device. Alternatively or additionally, an external device may respond to a signal received from the device (e.g. from the controller of the device).

In a second aspect, there is provided a system (e.g. a smoking substitute system) comprising a device according to the first aspect and an aerosol-forming article. The aerosol-forming article may comprise an aerosol-forming substrate at an upstream end of the aerosol-forming article. The article may be in the form of a smoking substitute article, e.g. heated tobacco (HT) consumable (also known as a heat-not-burn (HNB) consumable).

As used herein, the terms "upstream" and "downstream" are intended to refer to the flow direction of the vapour/aerosol i.e. with the downstream end of the article/consumable being the mouth end or outlet where the aerosol exits the consumable for inhalation by the user. The upstream end of the article/consumable is the opposing end to the downstream end.

The aerosol-forming substrate is capable of being heated to release at least one volatile compound that can form an aerosol. The aerosol-forming substrate may be located at the upstream end of the article/consumable.

In order to generate an aerosol, the aerosol-forming substrate comprises at least one volatile compound that is intended to be vaporised/aerosolised and that may provide the user with a recreational and/or medicinal effect when inhaled. Suitable chemical and/or physiologically active volatile compounds include the group consisting of: nicotine, cocaine, caffeine, opiates and opoids, cathine and cathinone, kavalactones, mysticin, beta-carboline alkaloids, salvinorin A together with any combinations, functional equivalents to, and/or synthetic alternatives of the foregoing.

The aerosol-forming substrate may comprise plant material. The plant material may comprise least one plant material selected from the list including *Amaranthus dubius, Arctostaphylos uva-ursi* (Bearberry), *Argemone mexicana, Amica, Artemisia vulgaris,* Yellow Tees, *Galea zacatechichi, Canavalia maritima* (Baybean), *Cecropia mexicana* (Guamura), *Cestrum noctumum, Cynoglossum virginianum* (wild comfrey), *Cytisus scoparius, Damiana, Entada rheedii, Eschscholzia califomica* (California Poppy), *Fittonia albivenis, Hippobroma longiflora, Humulus japonica* (Japanese Hops), *Humulus lupulus* (Hops), *Lactuca virosa* (Lettuce Opium), *Laggera alata, Leonotis leonurus, Leonurus cardiaca* (Motherwort), *Leonurus sibiricus* (Honeyweed), *Lobelia cardinalis, Lobelia inflata* (Indian-tobacco), *Lobelia siphilitica, Nepeta cataria* (Catnip), *Nicotiana species* (Tobacco), *Nymphaea alba* (White Lily), *Nymphaea caerulea* (Blue Lily), Opium poppy, *Passiflora incamata* (Passionflower), *Pedicularis densiflora* (Indian Warrior), *Pedicularis groenlandica* (Elephant's Head), *Salvia divinorum, Salvia dorrii* (Tobacco Sage), Salvia species (Sage), *Scutellaria galericulata, Scutellaria lateriflora, Scutellaria nana, Scutellaria* species (Skullcap), *Sida acuta* (Wireweed), *Sida rhombifolia, Silene capensis, Syzygium aromaticum* (Clove), *Tagetes lucida* (Mexican Tarragon), *Tarchonanthus camphoratus, Tumera diffusa* (Damiana), *Verbascum* (Mullein), *Zamia latifolia* (Maconha Brava) together with any combinations, functional equivalents to, and/or synthetic alternatives of the foregoing.

The plant material may be tobacco. Any type of tobacco may be used. This includes, but is not limited to, flue-cured tobacco, burley tobacco, Maryland Tobacco, dark-air cured tobacco, oriental tobacco, dark-fired tobacco, perique tobacco and rustica tobacco. This also includes blends of the above mentioned tobaccos.

The tobacco may comprise one or more of leaf tobacco, stem tobacco, tobacco powder, tobacco dust, tobacco derivatives, expanded tobacco, homogenised tobacco, shredded tobacco, extruded tobacco, cut rag tobacco and/or reconstituted tobacco (e.g. slurry recon or paper recon).

The aerosol-forming substrate may comprise a gathered sheet of homogenised (e.g. paper/slurry recon) tobacco or gathered shreds/strips formed from such a sheet.

The aerosol-forming substrate may comprise one or more additives selected from humectants, flavourants, fillers, aqueous/non-aqueous solvents and binders.

The flavourant may be provided in solid or liquid form. It may include menthol, liquorice, chocolate, fruit flavour (including e.g. citrus, cherry etc.), vanilla, spice (e.g. ginger, cinnamon) and tobacco flavour. The flavourant may be evenly dispersed throughout the aerosol-forming substrate or may be provided in isolated locations and/or varying concentrations throughout the aerosol-forming substrate.

The aerosol-forming substrate may be formed in a substantially cylindrical shape such that the article/consumable resembles a conventional cigarette. It may have a diameter of between 5 and 10mm e.g. between 6 and 9mm or 6 and 8mm e.g. around 7 mm. It may have an axial length of between 10 and 15mm e.g. between 11 and 14mm such as around 12 or 13mm.

The article/consumable may comprise at least one filter element. There may be a terminal filter element at the downstream/mouth end of the article/consumable.

The or at least one of the filter element(s) (e.g. the terminal filter element) may be comprised of cellulose acetate or polypropylene tow. The at least one filter element (e.g. the terminal filter element) may be comprised of activated charcoal. The at least one filter element (e.g. the terminal element) may be comprised of paper. The or each filter element may be at least partly (e.g. entirely) circumscribed with a plug wrap e.g. a paper plug wrap.

The terminal filter element (at the downstream end of the article/consumable) may be joined to the upstream elements forming the article/consumable by a circumscribing tipping layer e.g. a tipping paper layer. The tipping paper may have an axial length longer than the axial length of the terminal filter element such that the tipping paper completely circumscribes the terminal filter element plus the wrapping layer surrounding any adjacent upstream element.

In some embodiments, the article/consumable may comprise an aerosol-cooling element which is adapted to cool the aerosol generated from the aerosol-forming substrate (by heat exchange) before being inhaled by the user.

The article/consumable may comprise a spacer element that defines a space or cavity between the aerosol-forming substrate and the downstream end of the consumable. The spacer element may comprise a cardboard tube. The spacer element may be circumscribed by the (paper) wrapping layer.

According to a third aspect of the present invention, there is provided a method of using the system according to the second aspect, the method comprising inserting the aerosol-forming article into the device; and heating the article using the heater of the device.

In some embodiments the method may comprise inserting the article into a cavity within a body of the device and penetrating the article with the heating element of the device upon insertion of the article.

According to a fourth aspect of the present invention, there is provided a system comprising a heated tobacco device and a wireless charging dock configured to wirelessly charge the device. The system further comprises a system controller, coupled to the device, and configured to control an output power from the wireless charging dock.

Conveniently, the wireless charging dock comprises a power supply and a second plurality of coils coupled to the power supply.

Optionally, at least one of the second plurality of coils is positioned proximate to the device to wirelessly connect during a charging operation. By placing the second plurality of coils proximate to the device, maximum coupling between the device and second plurality of coils is established thereby, the device may be configured to wirelessly receive abundant amount of energy in less time.

Advantageously, the wireless charging dock is configured in a predetermined shape to arrange the heated tobacco device in preferred orientation for wireless charging. The wireless charging dock is geometrically shaped to receive the heated tobacco device in required orientation or alignment so as to enhance stability to the engagement between the heated tobacco device and the wireless charging dock.

Conveniently, the wireless charging dock comprises an engagement means to provide engagement of the heated tobacco device at the correct location of the heated tobacco device on the wireless charging dock. In one aspect, the engagement means is a magnetic means capable of providing engagement of the heated tobacco device at the correct location on the wireless charging dock. The engagement means would provide the necessary engagement of the device with the wireless charging dock so as to arrange the device in the preferred orientation for wireless charging. E.g. magnetic elements may be provided in the wireless charging dock and the heated tobacco device. The magnetic elements may interact with one another, e.g. attract or repel each other. Thus, a preferred charging position or orientation of the wireless charging dock and the heated tobacco device may be assumed by the attracting and repelling forces of the magnetic elements of the wireless charging dock and the heated tobacco device. In other words, when a user brings the wireless charging dock and the heated tobacco device in close proximity, the forces may turn the wireless charging dock and the heated tobacco device relative to one another to arrive at a preferred alignment for preferred charging. At the same time, the position may be held against external forces by the magnetic elements.

The invention includes the combination of the aspects and preferred features described except where such a combination is clearly impermissible or expressly avoided.

The skilled person will appreciate that except where mutually exclusive, a feature or parameter described in relation to any one of the above aspects may be applied to any other aspect. Furthermore, except where mutually exclusive, any feature or parameter described herein may be applied to any aspect and/or combined with any other feature or parameter described herein.

### SUMMARY OF THE FIGURES

So that the invention may be understood, and so that further aspects and features thereof may be appreciated, embodiments illustrating the principles of the invention will now be discussed in further detail with reference to the accompanying figures, in which:
Figure 1A is a schematic of a smoking substitute system;
Figure 1B is a schematic of a variation of the smoking substitute system of Figure 1A;
Figure 2A is a front view of a first embodiment of a smoking substitute system with the consumable engaged with the device;
Figure 2B is a front view of the first embodiment of the smoking substitute system with the consumable disengaged from the device;
Figure 2C is a section view of the consumable of the first embodiment of the smoking substitute system;
Figure 2D is a detailed view of an end of the device of the first embodiment of the smoking substitute system;
Figure 2E is a section view of the first embodiment of the substitute smoking system;
Figure 3A is a schematic of a heated tobacco device of the smoking substitute system in accordance with an aspect of the present invention;
Figure 3B is a schematic of a wireless charging dock for wirelessly charging the heated tobacco device of Figure 3A; and
Figure 3C is a schematic of a smoking substitute system in accordance with an aspect of the present invention.

### DETAILED DESCRIPTION OF THE INVENTION

Aspects and embodiments of the present invention will now be discussed with reference to the accompanying figures. Further aspects and embodiments will be apparent to those skilled in the art. All documents mentioned in this text are incorporated herein by reference.

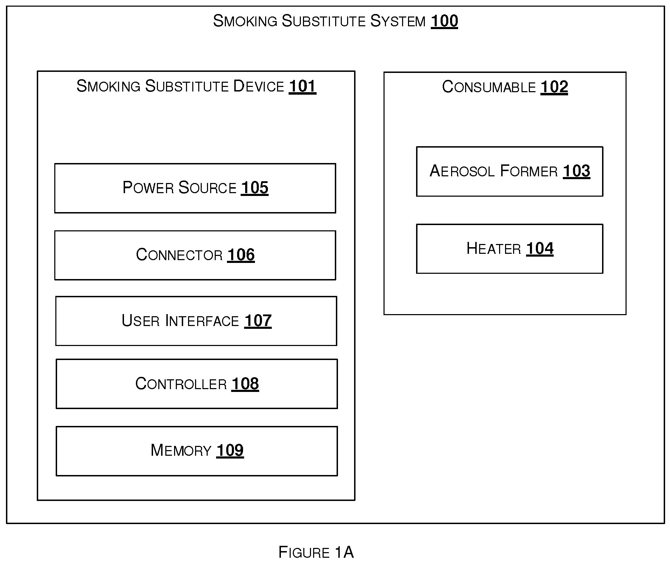

Detailed description: Generic System Figure 1A is a schematic providing a general overview of a smoking substitute system 100. The system 100 includes a substitute smoking device 101 and an aerosol-forming article in the form of a consumable 102, which comprises an aerosol former 103. The system is configured to vaporise the aerosol former by heating the aerosol former 103 (so as to form a vapour/aerosol for inhalation by a user).

In the illustrated system, the heater 104 forms part of the consumable 102 and is configured to heat the aerosol former 103. Heat from the heater 104 vaporises the aerosol former 103 to produce a vapour. The vapour subsequently condenses to form an aerosol, which is ultimately inhaled by the user.

The system 100 further comprises a power source 105 that forms part of the device 101. In other embodiments the power source 105 may be external to (but connectable to) the device 101. The power source 105 is electrically connectable to the heater 104 such that the power source 105 is able to supply power to the heater 104 (i.e. for the purpose of heating the aerosol former 103). Thus, control of the electrical connection of the power source 105 to the heater 104 provides control of the state of the heater 104. The power source 105 may be a power store, for example a battery or rechargeable battery (e.g. a lithium ion battery). The power source 105 may wirelessly receive energy to supply the power to the heater 104.

The system 100 further comprises an I/O module comprising a connector 106 (e.g. in the form of a USB port, Micro USB port, USB-C port, etc.). The connector 106 is configured for connection to an external source of electrical power, e.g. a mains electrical supply outlet. The connector 106 may be used in substitution for the power source 105. That is the connector 106 may be electrically connectable to the heater 104 so as to supply electricity to the heater 104. In such embodiments, the device may not include a power source, and the power source of the system may instead comprise the connector 106 and an external source of electrical power (to which the connector 106 provides electrical connection).

In some embodiments, the connector 106 may be used to charge and recharge the power source 105 where the power source 105 includes a rechargeable battery.

In another aspect, the system 100 receives energy wirelessly from the external power source without using the connector 106. For example, the system 100 may not include the input connector 106 or any input power ports other than the wireless charging capability, such as a USB port, Micro USB port, USB-C port, etc. The system 100 thus directly and exclusively receives energy from the external power source via a first plurality of coils, without receiving through the connector 106 or any input power ports for charging the power source 105

The system 100 also comprises a user interface (Ul) 107. Although not shown, the UI 107 may include input means to receive commands from a user. The input means of the UI 107 allows the user to control at least one aspect of the operation of the system 100. The input means may, for example, be in the form of a button, touchscreen, switch, microphone, etc.

The UI 107 also comprises output means to convey information to the user. The output means may, for example, comprise lights (e.g. LEDs), a display screen, speaker, vibration generator, etc.

The system 100 further comprises a controller 108 that is configured to control at least one function of the device 101. In the illustrated embodiment, the controller 108 is a component of the device 101, but in other embodiments may be separate from (but connectable to) the device 101. The controller 108 is coupled to a memory 109 that stores instructions of the controller 108 in controlling at least one function of the device 101.

The controller 108 is configured to control the operation of the heater 104 and, for example, may be configured to control the voltage applied from the power source 105 to the heater 104. The controller 108 may be configured to toggle the supply of power to the heater 105 between an on state, in which the full output voltage of the power source 105 is applied to the heater 104, and an off state, in which the no voltage is applied to the heater 104. In one aspect, the controller 108 is configured to control output power from a wireless charging module (not shown) to the power source 105 for supplying power to the heater 104.

Although not shown, the system 100 may also comprise a voltage regulator to regulate the output voltage from the power source 105 to form a regulated voltage. The regulated voltage may then be applied to the heater 104.

In addition to being connected to the heater 104, the controller 108 is operatively connected to the UI 107. Thus, the controller 108 may receive an input signal from the input means of the UI 107. Similarly, the controller 108 may transmit output signals to the UI 107. In response, the output means of the UI 107 may convey information, based on the output signals, to a user.

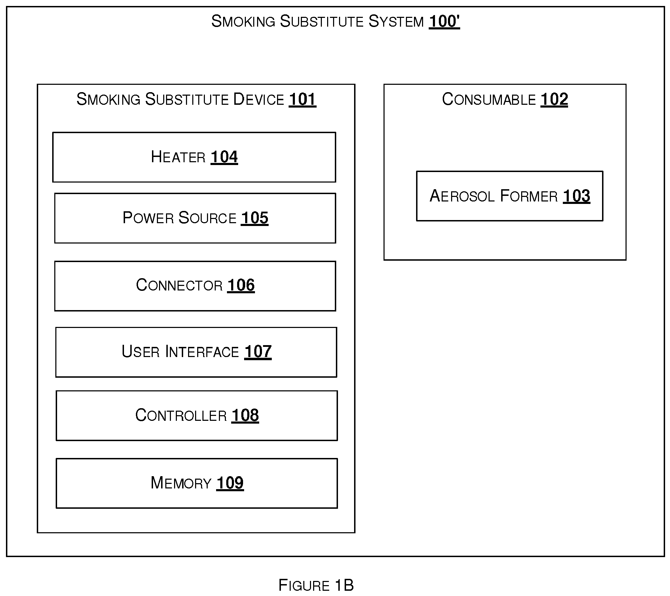

Figure 1B is a schematic showing a variation of the system 100 of Figure 1A. In the system 100' of Figure 1B, the heater 104 forms part of the consumable 102, rather than the device 101. In this variation, the heater 104 is electrically connectable to the power source 105, for example, when the consumable 102 is engaged with the device 101.

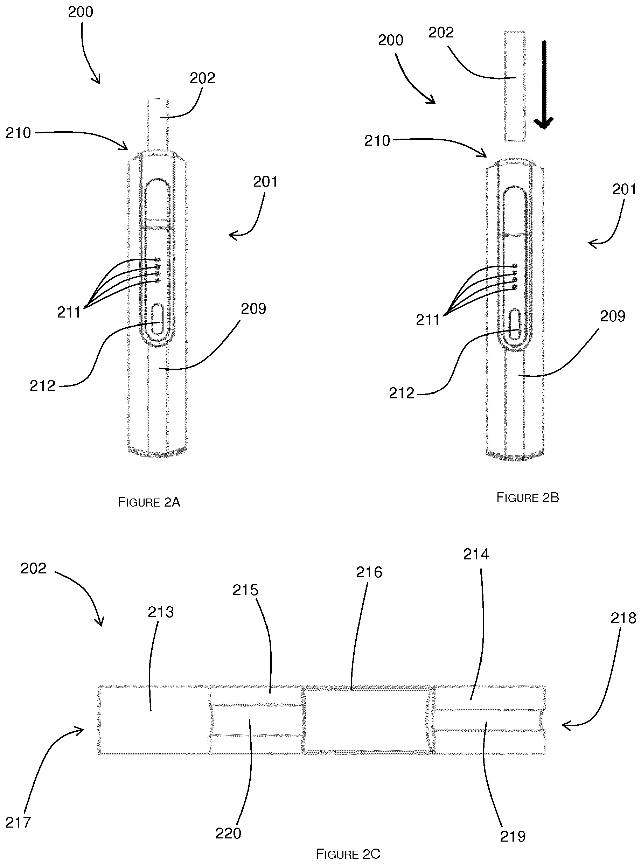

Figures 2A and 2B illustrate a heated-tobacco (HT) smoking substitute system 200. The system 200 is an example of the systems 100, 100' described in relation to Figures 1A or 1B. System 200 includes an HT device 201 and an HT consumable 202. The description of Figures 1A and 1B above is applicable to the system 200 of Figures 2A and 2B, and will thus not be repeated.

The device 201 and the consumable 202 are configured such that the consumable 202 can be engaged with the device 201. Figure 2A shows the device 201 and the consumable 202 in an engaged state, whilst Figure 2B shows the device 201 and the consumable 202 in a disengaged state.

The device 201 comprises a body 209 and cap 210. In one aspect, the body 209 is an elongate body with one end of the body 209 configured for engagement with an aerosol-forming article (e.g. a heated tobacco (HT) consumable. The other end of the body 209 may be configured for engagement with a wireless charging dock or a wireless charging system that enables wireless transmission of power to charge the device. Outer surface of the other end of the body 209 may be configured to be flat with increased surface density so as to wirelessly receive abundant energy in less charging time. In use the cap 210 is engaged at an end of the body 209. Although not apparent from the figures, the cap 210 is moveable relative to the body 209. In particular, the cap 210 is slideable and can slide along a longitudinal axis of the body 209.

The device 201 comprises a wireless charging module (not shown) configured to wirelessly receive energy for charging the rechargeable battery. In one aspect, the wireless charging module is located on an inner surface of the device 201. The wireless charging module comprises a first plurality of coils located adjacent to the power source, with at least one of the first plurality of coils being located at a predetermined distance from the outer surface of the device.

The device 201 comprises an output means (forming part of the UI of the device 201) in the form of a plurality of light-emitting diodes (LEDs) 211 arranged linearly along the longitudinal axis of the device 201 and on an outer surface of the body 209 of the device 201. A button 212 is also arranged on an outer surface of the body 209 of the device 201 and is axially spaced (i.e. along the longitudinal axis) from the plurality of LEDs 211. In another aspect, the button 212 may be located on side opposite to the first plurality of coils, for user interaction.

Figure 2C show a detailed section view of the consumable of 202 of the system 200. The consumable 202 generally resembles a cigarette. In that respect, the consumable 202 has a generally cylindrical form with a diameter of 7 mm and an axial length of 70 mm. The consumable 202 comprises an aerosol forming substrate 213, a terminal filter element 214, an upstream filter element 215 and a spacer element 216. In other embodiments, the consumable may further comprise a cooling element. A cooling element may exchange heat with vapour that is formed by the aerosol-forming substrate 213 in order to cool the vapour so as to facilitate condensation of the vapour.

The aerosol-forming substrate 213 is substantially cylindrical and is located at an upstream end 217 of the consumable 202, and comprises the aerosol former of the system 200. In that respect, the aerosol forming substrate 213 is configured to be heated by the device 201 to release a vapour. The released vapour is subsequently entrained in an airflow flowing through the aerosol-forming substrate 213. The airflow is produced by the action of the user drawing on a downstream 218 (i.e. terminal or mouth end) of the consumable 202.

In the present embodiment, the aerosol forming substrate 213 comprises tobacco material that may, for example, include any suitable parts of the tobacco plant (e.g. leaves, stems, roots, bark, seeds and flowers). The tobacco may comprise one or more of leaf tobacco, stem tobacco, tobacco powder, tobacco dust, tobacco derivatives, expanded tobacco, homogenised tobacco, shredded tobacco, extruded tobacco, cut rag tobacco and/or reconstituted tobacco (e.g. slurry recon or paper recon). For example, the aerosol-forming substrate 213 may comprise a gathered sheet of homogenised (e.g. paper/slurry recon) tobacco or gathered shreds/strips formed from such a sheet.

In order to generate an aerosol, the aerosol forming substrate 213 comprises at least one volatile compound that is intended to be vaporised/aerosolised and that may provide the user with a recreational and/or medicinal effect when inhaled. The aerosol-forming substrate 213 may further comprise one or more additives. For example, such additives may be in the form of humectants (e.g. propylene glycol and/or vegetable glycerine), flavourants, fillers, aqueous/non-aqueous solvents and/or binders.

The terminal filter element 214 is also substantially cylindrical, and is located downstream of the aerosol forming substrate 213 at the downstream end 218 of the consumable 202. The terminal filter element 214 is in the form of a hollow bore filter element having a bore 219 (e.g. for airflow) formed therethrough. The diameter of the bore 219 is 2 mm. The terminal filter element 214 is formed of a porous (e.g. monoacetate) filter material. As set forth above, the downstream end 218 of the consumable 202 (i.e. where the terminal filter 214 is located) forms a mouthpiece portion of the consumable 202 upon which the user draws. Airflow is drawn from the upstream end 217, thorough the components of the consumable 202, and out of the downstream end 218. The airflow is driven by the user drawing on the downstream end 218 (i.e. the mouthpiece portion) of the consumable 202.

The upstream filter element 215 is located axially adjacent to the aerosol-forming substrate 213, between the aerosol-forming substrate 213 and the terminal filter element 214. Like the terminal filter 214, the upstream filter element 215 is in the form of a hollow bore filter element, such that it has a bore 220 extending axially therethrough. In this way, the upstream filter 215 may act as an airflow restrictor. The upstream filter element 215 is formed of a porous (e.g. monoacetate) filter material. The bore 220 of the upstream filter element 214 has a larger diameter (3 mm) than the terminal filter element 214.

The spacer 216 is in the form of a cardboard tube, which defines a cavity or chamber between the upstream filter element 215 and the terminal filter element 214. The spacer 216 acts to allow both cooling and mixing of the vapour/aerosol from the aerosol-forming substrate 213. The spacer has an external diameter of 7 mm and an axial length of 14mm.

Although not apparent from the figure, the aerosol-forming substrate 213, upstream filter 215 and spacer 216 are circumscribed by a paper wrapping layer. The terminal filter 214 is circumscribed by a tipping layer that also circumscribes a portion of the paper wrapping layer (so as to connect the terminal filter 214 to the remaining components of the consumable 202). The upstream filter 215 and terminal filter 214 are circumscribed by further wrapping layers in the form of plug wraps.

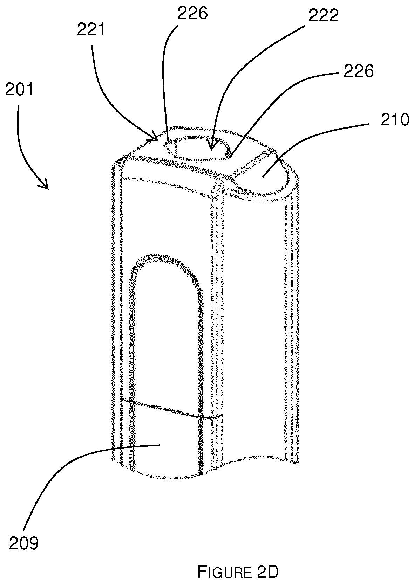

Returning now to the device 201, Figure 2D illustrates a detailed view of the end of the device 201 that is configured to engage with the consumable 202. The cap 210 of the device 201 includes an opening 221 to an internal cavity 222 (more apparent from Figure 2D) defined by the cap 210. The opening 221 and the cavity 222 are formed so as to receive at least a portion of the consumable 202. During engagement of the consumable 202 with the device 201, a portion of the consumable 202 is received through the opening 221 and into the cavity 222. After engagement (see Figure 2B), the downstream end 218 of the consumable 202 protrudes from the opening 221 and thus protrudes also from the device 201. The opening 221 includes laterally disposed notches 226. When a consumable 202 is received in the opening 221, these notches 226 remain open and could, for example, be used for retaining a cover to cover the end of the device 201.

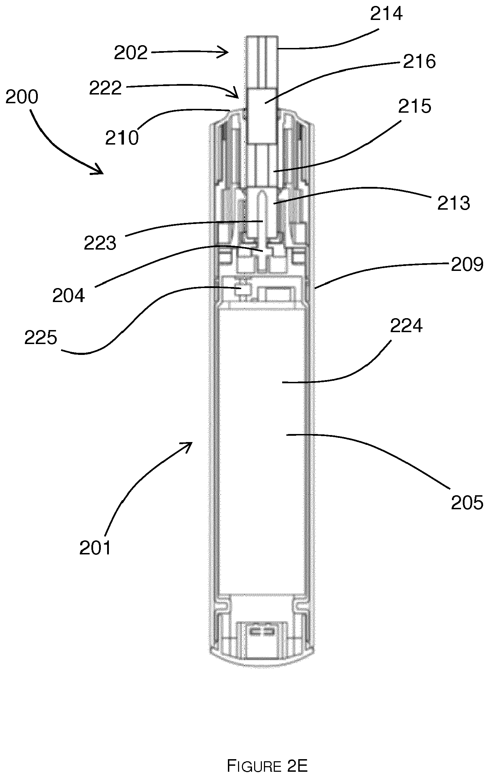

Figure 2E shows a cross section through a central longitudinal plane through the device 201. The device 201 is shown with the consumable 202 engaged therewith.

The device 201 comprises a heater 204 comprising heating element 223. The heater 204 forms part of the body 209 of the device 201 and is rigidly mounted to the body 209. In the illustrated embodiment, the heater 204 is a rod heater with a heating element 223 having a circular transverse profile. In other embodiments the heater may be in the form of a blade heater (e.g. heating element with a rectangular transverse profile) or a tube heater (e.g. heating element with a tubular form).

The heating element 223 of the heater 204 projects from an internal base of the cavity 222 along a longitudinal axis towards the opening 221. As is apparent from the figure, the length (i.e. along the longitudinal axis) of the heating element is less than a depth of the cavity 222. In this way, the heating element 223 does not protrude from or extend beyond the opening 221.

When the consumable 202 is received in the cavity 222 (as is shown in Figure 2E), the heating element 223 penetrates the aerosol-forming substrate 213 of the consumable 202. In particular, the heating element 223 extends for nearly the entire axial length of the aerosol-forming substrate 213 when inserted therein. Thus, when the heater 204 is activated, heat is transferred radially from an outer circumferential surface the heating element 223 to the aerosol-forming substrate 213.

The device 201 further comprises an electronics cavity 224. A power source, in the form of a rechargeable battery 205 (a lithium ion battery), is located in electronics cavity 224. The electronics cavity 224 may also comprise a first plurality of coils coupled to the rechargeable battery 205 for receiving the power and charging the rechargeable battery 205. The rechargeable battery 205 or the electronics cavity/compartment may be sealed.

The controller (not shown) is configured to control at least one function of the device 201. For example, the controller is configured to control the operation of the heater 204. Such control of the operation of the heater 204 may be accomplished by the controller toggling the electrical connection of the rechargeable battery 205 to the heater 204. For example, the controller is configured to control the heater 204 in response to a user depressing the button 212. Depressing the button 212 may cause the controller to allow a voltage (from the rechargeable battery 205) to be applied to the heater 204 (so as to cause the heating element 223 to be heated). In one aspect, the controller is configured to control output power from a wireless charging module (not shown) to the power source 105 for supplying power to the heater 104.

The controller is also configured to control the LEDs 211 in response to (e.g. a detected) a condition of the device 201 or the consumable 202. For example, the controller may control the LEDs to indicate whether the device 201 is in an on state or an off state (e.g. one or more of the LEDs may be illuminated by the controller when the device is in an on state). In another example, the controller may control the LEDs 211 to indicate the condition of the device such as present charge level or charging status or when the device is in a preferred charging orientation. In yet another example, the controller may control the LEDs 211 to may indicate the beginning, progressing and ending of the wireless charging operation.

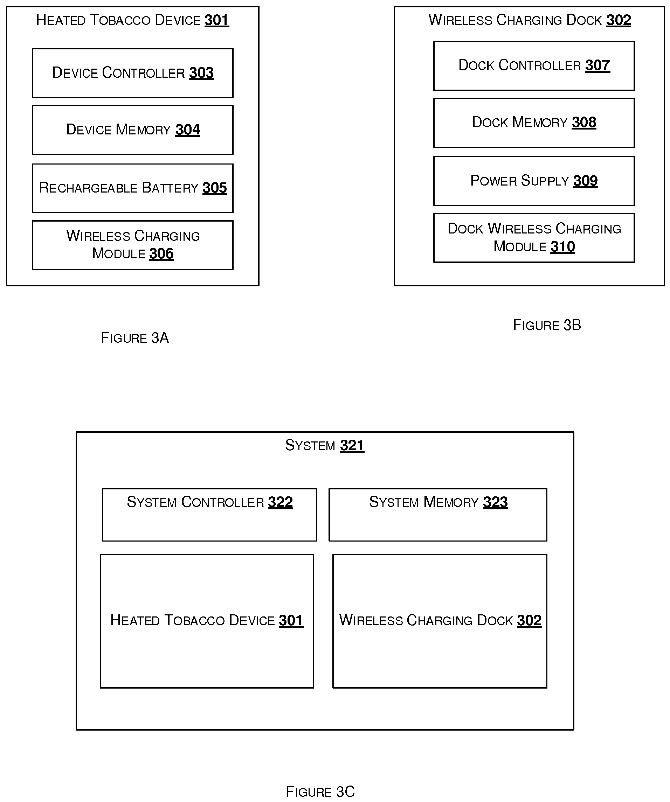

The device 201 comprises a further input means (i.e. in addition to the button 212) in the form of a puff sensor 225. The puff sensor 225 is configured to detect a user drawing (i.e. inhaling) at the downstream end 218 of the consumable 202. The puff sensor 225 may, for example, be in the form of a pressure sensor, flowmeter or a microphone. The puff sensor 225 is operatively connected to the controller in the electronics cavity 224, such that a signal from the puff sensor 225, indicative of a puff state (i.e. drawing or not drawing), forms an input to the controller (and can thus be responded to by the controller). An exemplary heated tobacco device 301 with wireless charging capability is disclosed. The heated tobacco device 301 wirelessly receive energy from a wireless charging dock 302 to charge the heated tobacco device 301. Figure 3A is a schematic of a heated tobacco device 301 of a smoking substitute system in accordance with an aspect of the present invention.

The heated tobacco device 301 (hereinafter referred to as device 301) comprises a device controller 303, a device memory 304, a rechargeable battery 305 and a wireless charging module 306. In one aspect, the device controller 303 may be interchangeably referred to the controller 108. The device controller 303 is configured to control at least one function of the device 301. In one example, the device controller 303 is configured to control an output power received from the wireless charging module 306.

The device memory 304 may be interchangeably referred to the memory 109, for storing instructions that are executable by the device controller 303 to control at least one function of the device 301. For example, the function of the device 301 include charging of the rechargeable battery 305 with power received via the wireless charging module 306 and to supply necessary power to the heater (not shown). The rechargeable battery 305 may be interchangeably referred as the power source 105.

The wireless charging module 306 is located on an inner surface of the device 301. Alternatively, the wireless charging module 306 is located within an electronic compartment (not shown) located on the inner surface of the device 301. The rechargeable battery 305 or the electronic compartment may be sealed. The wireless charging module 306 comprises a first plurality of coils (not shown) located adjacent to the rechargeable battery 305 so as to efficiently charge the rechargeable battery 305 without any power loss. In one aspect, at least one of the first plurality of coils is located at a predetermined distance from the outer surface of the device 301 to efficiently and wirelessly receive the energy for charging the rechargeable battery 305. One example of the predetermined distance may be less than 5mm. The outer surface of the device 301 may be configured to be flat with increased surface density on the outer surface so as to wirelessly receive abundant amount of energy in less charging time.

The device 301 further comprises at least one light (not shown), located on a side opposite to the first plurality of coils, for indicating charge level or charging status to a user or when the device 301 is in a preferred charging orientation. The light may comprise the one or more LEDs 211 to indicate the charging level or status to the user. In one example, the device controller 303 may light the one or more LEDs 211 in progressive pattern to show the charging level. In another example, the device controller 303 may light at least one LED in flashing pattern to indicate the charging status of the device 301. In yet another example, the device controller 303 may light the same LED or another LED to indicate whether the device 301 is placed in the preferred orientation to receive the power. This would enhance intuitive user experience.

The device 301 further comprises at least one button (not shown), located on a side opposite to the first plurality of coils, for user interaction. User interaction may include user request to know the charging level or charging state of the device.

Optionally, the device 301 further comprises at least one feedback means (not shown) to generate one of a haptic feedback, audio and visual feedback to indicate the user about one of beginning, progressing and ending of the wireless charging operation. This would keep the user informed about the progress of charging and restrict the user from using the device.

Figure 3B is a schematic of the wireless charging dock 302 for wirelessly charging the heated tobacco device 301 of Figure 3A.

The wireless charging dock (hereinafter referred to as dock) 302 comprises a dock controller 307, a dock memory 308, a power supply 309 and a dock wireless charging module 310. The dock controller 307 is configured to control at least one function of the dock 302. In one example, the dock controller 307 is configured to control an output power supplied to the heated tobacco device 301 from the power supply 309, in particular when the presence of a heated tobacco device 301 for charging has been determined.

The dock memory 308 may be configured for storing instructions that are executable by the dock controller 307 to control at least one function of the dock 302. For example, the function of the dock 302 include wirelessly transmitting power to wireless charging module 306 of the device 301. The dock controller 307 may also detect as to whether the device 301 is arranged in the preferred orientation with the dock 302. Preferred orientation, may be for example, include engagement at the correct location of the device 301 on the dock 302.

The dock 302 comprises a second plurality of coils coupled to the power supply 309. Optionally, at least one of the second plurality of coils is positioned proximate to the device 301 so as to wirelessly connect during the charging operation. In one aspect, the body of the dock 302 is configured in a predetermined shape so as to arrange the device 301 in the preferred orientation for wireless charging with the dock 302. In one aspect, the preferred orientation is a preferred charging orientation provided by an engagement means (not shown) to arrange the device 301 at the correct location on the dock 302.

In one aspect, the engagement means is a magnetic means capable of providing magnetic coupling of the device 301 with the dock 302. The magnetic means enables desired coupling of the device 301 at the correct location on the dock 302. The engagement means would provide the necessary engagement of the device 301 with the dock 302 so as to arrange the device 301 in the preferred orientation for wireless charging.

The dock wireless charging module 310 is configured to operate in synchronization with the wireless charging module 306 of the device 301. The dock wireless charging module 310 controls the output power of the power supply 309 via the second plurality of coils to the first plurality of coils of the wireless charging module 306 of the device 301. The second plurality of coils is placed in proximate distance with at least one of first plurality of coils so as to wirelessly transmit the power from the power supply 309. The wireless charging module 306 of the device 301 continuously monitors the charging level and charging state of the rechargeable battery 305 and upon determining that the rechargeable battery 305 is fully charged, the wireless charging module 306 wirelessly transmits a confirmation message to the dock 302. The dock wireless charging module 310 of the dock 302 receives the confirmation message and in response, terminates the power supply to the second plurality of coils thereby disabling the operation of the dock wireless charging module 310.

Figure 3C is a schematic of a smoking substitute system in accordance with an aspect of the present invention.

The system 321 comprises the device 301 and the dock 302. The dock 302 is configured to wirelessly charge the device 301. The system further comprises a system controller 322, coupled to the dock 302, and configured to control the output power from the dock 302 to the device 301. The system controller 322, in one aspect, performs the functionality of the dock controller 307.

In operation, the device 301 is arranged in the preferred orientation with the dock 302 via the engagement means. The dock wireless charging module 310 activates the power supply to the second plurality of coils, that in turn wirelessly transmits the power to the first plurality of coils of the device 301. The device controller 303 monitors the charging level and charging status of the rechargeable battery 305 of the device 301. Upon determining that the rechargeable battery 305 is fully charged, the wireless charging module 306 wirelessly transmits a confirmation message to the dock 302. The dock wireless charging module 310 of the dock 302 receives the confirmation message and in response, terminates the power supply to the second plurality of coils thereby disabling the operation of the dock wireless charging module 310. In another aspect, the system controller 322 receives the confirmation message and in response, control the output power from the dock 302. Thus, enabling the device 301 with wireless charging capability without using wires, easy to use, and portable.

The features disclosed in the foregoing description, or in the following claims, or in the accompanying drawings, expressed in their specific forms or in terms of a means for performing the disclosed function, or a method or process for obtaining the disclosed results, as appropriate, may, separately, or in any combination of such features, be utilised for realising the invention in diverse forms thereof.

While the invention has been described in conjunction with the exemplary embodiments described above, many equivalent modifications and variations will be apparent to those skilled in the art when given this disclosure. Accordingly, the exemplary embodiments of the invention set forth above are considered to be illustrative and not limiting. Various changes to the described embodiments may be made without departing from the spirit and scope of the invention.

For the avoidance of any doubt, any theoretical explanations provided herein are provided for the purposes of improving the understanding of a reader. The inventors do not wish to be bound by any of these theoretical explanations.

Any section headings used herein are for organizational purposes only and are not to be construed as limiting the subject matter described.

Throughout this specification, including the claims which follow, unless the context requires otherwise, the words "have", "comprise", and "include", and variations such as "having", "comprises", "comprising", and "including" will be understood to imply the inclusion of a stated integer or step or group of integers or steps but not the exclusion of any other integer or step or group of integers or steps.

It must be noted that, as used in the specification and the appended claims, the singular forms "a," "an," and "the" include plural referents unless the context clearly dictates otherwise. Ranges may be expressed herein as from "about" one particular value, and/or to "about" another particular value. When such a range is expressed, another embodiment includes from the one particular value and/or to the other particular value. Similarly, when values are expressed as approximations, by the use of the antecedent "about," it will be understood that the particular value forms another embodiment. The term "about" in relation to a numerical value is optional and means, for example, +/- 10%.

The words "preferred" and "preferably" are used herein refer to embodiments of the invention that may provide certain benefits under some circumstances. It is to be appreciated, however, that other embodiments may also be preferred under the same or different circumstances. The recitation of one or more preferred embodiments therefore does not mean or imply that other embodiments are not useful, and is not intended to exclude other embodiments from the scope of the disclosure, or from the scope of the claims.

## Claims

1. A heated tobacco device, comprising:
a rechargeable battery; and
a wireless charging module configured to wirelessly receive energy for charging the rechargeable battery.

2. The device of claim 1, wherein the device further comprises a device controller, coupled to the rechargeable battery, and configured to control an output power from the wireless charging module.

3. The device of at least one of the preceding claims, wherein the device is adapted for receiving energy only wirelessly for charging the rechargeable battery, and wherein the device in particular does not comprise a dedicated power input port.

4. The device of at least one of the preceding claims, wherein the wireless charging module comprises a first plurality of coils.

5. The device of at least one of the preceding claims, wherein at least one of the first plurality of coils is located adjacent to the rechargeable battery.

6. The device of at least one of the preceding claims, wherein the wireless charging module is located on an inner surface of the heated tobacco device.

7. The device of at least one of the preceding claims, wherein the at least one of the first plurality of coils is located at a predetermined distance from the outer surface of the device.

8. The device of at least one of the preceding claims, wherein the outer surface of the device comprises a geometric shape for increasing coupling alignment between the first and the second plurality of coils during charging.

9. The device of at least one of the preceding claims, wherein the device further comprises at least one light, located on a side opposite to the first plurality of coils, for indicating charge level or charging status to a user or when the device is in a preferred charging orientation, and/or at least one button, located on a side opposite to the first plurality of coils, for user interaction and/or at least one feedback means to generate one of a haptic feedback, audio and/or visual feedback to inform the user about one of a beginning, progressing and ending of the wireless charging operation.

10. A system, comprising:
a heated tobacco device of at least one of the preceding claims;
a wireless charging dock configured to wirelessly charge the heated tobacco device; and
a system controller, coupled to the wireless charging dock, and configured to control an output power from the wireless charging dock to the heated tobacco device.

11. The system of claim 10, wherein the wireless charging dock comprises:
a power supply; and
a second plurality of coils coupled to the power supply.

12. The system of claim 10 or 11, wherein at least one of the second plurality of coils is positioned proximate to the device to wirelessly connect during a charging operation.

13. The system of at least one of claims 10 to 12, wherein the wireless charging dock is configured in a predetermined shape to arrange the heated tobacco device in preferred orientation for wireless charging.

14. The system of at least one of claims 10 to 13, wherein the wireless charging dock comprises an engagement means to provide engagement of the heated tobacco device at the correct location of the heated tobacco device on the wireless charging dock.

15. The system of claim 14, wherein the engagement means is a magnetic engagement means capable of providing engagement of the heated tobacco device at the correct location on the wireless charging dock.
